# EUROPÄISCHE PATENTANMELDUNG

(11) **EP 3 556 789 A1**
(43) Veröffentlichungstag der Anmeldung: **23.10.2019**
(21) Anmeldenummer: 18167524.0
(22) Anmeldetag: 16.04.2018
(51) Int. Cl.: C08G 18/80, C07F 7/18

(54) **HYDROPHILE VERNETZER ENTHALTEND ALKOXYSILANGRUPPEN**

(71) Anmelder: Evonik Degussa GmbH, 45128 Essen (DE)
(72) Erfinder: STACHE, Wiebke, 45699 Herten (DE); UNKELHÄUSSER, Tobias, 59348 Lüdighausen (DE); SPYROU, Emmanouil, 46514 Schermbeck (DE); NAUMANN, Sabine, 44651 Herne (DE); BAUER, Tina, 45894 Gelsenkirchen (DE); BALLAUF, Sina, 47167 Duisburg (DE)

(57) **Zusammenfassung**

Die vorliegende Erfindung betrifft in Wasser dispergierbare hydrophile Vernetzer basierend auf eine Isocyanat-Gruppe enthaltenden Alkoxysilanen und Alkoxysilangemischen, ein Verfahren zu deren Hersteallung, Zusammensetzungen, umfassend diese hydrophilen Vernetzer und deren Verwendung als Ausgangskomponente bei der Herstellung von Polyurethan-Kunststoffen, insbesondere als Vernetzer für wasserlösliche oder -dispergierbare Lack-, Klebstoff- oder Dichtstoffbindemittel oder Bindemittel-Komponenten.

## Beschreibung

Die vorliegende Erfindung betrifft in Wasser dispergierbare, hydrophile Vernetzer basierend auf eine Isocyanat-Gruppe enthaltenden Alkoxysilanen und Alkoxysilangemischen, ein Verfahren zu deren Herstellung, Zusammensetzungen, umfassend diese hydrophilen Vernetzer und deren Verwendung als Ausgangskomponente bei der Herstellung von Polyurethan-Kunststoffen, insbesondere als Vernetzer für wasserlösliche oder -dispergierbare Lack-, Klebstoff- oder Dichtstoffbindemittel oder Bindemittel-Komponenten.

Für wasserlösliche oder -dispergierbare Bindemittel gibt es viele Anwendungsgebiete, z. B. in Lacken, Farben, Textilbehandlungsmitteln und Klebstoffen. Nachteilig ist die schwache Resistenz gegenüber Wasser und Chemikalien. In diesem Punkt schneiden die lösemittelhaltigen Bindemittel oft besser ab als die wässrigen. Um die Beständigkeit von wasserlöslichen oder -dispergierbaren Bindemitteln zu verstärken, wird ein Vernetzer zum Bindemittel hinzugesetzt. Als Vernetzer kommen je nach Bindemittel u. a. hydrophile Produkte mit Methylol-, Ethylenimine-, Epoxy-, Isocyanat- oder Carbodiimid-Funktion zum Einsatz.

Wasserdispergierbare Polyisocyanate stellen eine Klasse von hydrophilen Vernetzern dar, die in den letzten Jahren für verschiedene Anwendungsgebiete an Bedeutung gewannen. Sie finden heute insbesondere als Vernetzerkomponenten für Acrylat-basierte Lacke, qualitativ hochwertige wasserverdünnbare Zweikomponenten-Polyurethan-Lacke (2K-PUR-Lacke) oder als Zusatzmittel für wässrige Dispersionsklebstoffe Verwendung. Sie dienen zur Vernetzung wässriger Dispersionen in der Textil- bzw. Lederausrüstung oder formaldehydfreier Textildruckfarben und eignen sich darüber hinaus beispielsweise auch als Hilfsmittel zur Nassverfestigung von Papier, wie z. B. in der EP 0 959 087 A1 offenbart.

In der Praxis werden heute für die überwiegende Mehrzahl der Anwendungen ausschließlich nichtionische, mit Hilfe von Polyethern hydrophil modifizierte Polyisocyanate eingesetzt. Die Herstellung solcher wasserdispergierbaren Polyisocyanate wird beispielsweise in den EP 0 959 087, EP 0 206 059, EP 0 540 985 ausführlich diskutiert. Die Polyisocyanate enthalten in der Regel eine oder mehrere Isocyanuratstrukturen.

Vor dem Hintergrund einer zunehmend strengeren Umweltgesetzgebung wird nach toxikologisch unbedenklichen, NCO-freien Alternativen zu den hydrophilen Polyisocyanaten gesucht, welche möglichst die gleichen Anforderungen erfüllen. Ein weiterer Nachteil bei Einsatz von NCO-haltigen Vernetzern in wässrigen Bindemitteln ist die auf wenige Stunden limitierte Verarbeitungszeit.

Um den Umgang mit freien Isocyanaten zu vermeiden, können prinzipiell blockierte Isocyanate verwendet werden. Typische Blockierungsmittel sind beispielsweise Acetessigester, Acetonoxim, Butanonoxim, Caprolactam, 3,5- Dimethylpyrazol, 1,2,4-Triazol, Dimethyl-1,2,4-triazol, Imidazol, Malonsäurediethylester, Acetylacetonat oder beliebige Gemische dieser Blockierungsmittel. Bei Einsatz von Malonsäurediethylester als Blockierungsmittel wird pro NCO-Gruppe ein Malonsäuredieethylester eingesetzt, ebenso beim Acetylacetonat. Über die Reaktion des C-H-aziden Kohlenstoffes mit der NCO-Gruppe findet die Bildung eines Amids statt. Solche mit CH-aziden Verbindungen blockierte Polyisocyanatvernetzer haben eine Vernetzungstemperatur von ca. 100°C. Die über Malonsäuredieethylester blockierten Di- und Polyisocyanate sind allerdings nur für die Anwendung in lösemittelbasierte Systeme bekannt (vgl. EP 0 600 314, DE 198 13 352, DE 43 24 947 A1).

Alkoxysilan-basierte Systeme stellen prinzipiell eine toxikologisch unbedenklichere Alternative zu den bisher bekannten hydrophilen Vernetzern mit Methylol-, Ethylenimine-, Epoxy-, Isocyanat-Funktion dar. Einige Alkoxysilan-basierte Systeme, wie z. B. Aminoalkylalkoxysilane, sind sogar wasserlöslich. Auch sind wasserbasierende Zusammensetzungen mit multifunktionellen Organopolysiloxanen, welche Silanolgruppen besitzen, als Haftvermittler bekannt, vgl. EP 0 716 128 A2. Als Vernetzer für wässrige Bindemittelkomponenten eignen sich die Silanole jedoch nur eingeschränkt, weil sie entweder zu reaktiv sind oder bezüglich der Lackeigenschaften nicht die gleichen Anforderungen wie hydrophile Polyisocyanate erfüllen.

Aufgabe der vorliegenden Erfindung ist es hydrophile Vernetzer, die vorzugsweise in Wasser dispergierbar sind, bereitzustellen. Eine weitere Aufgabe ist die Bereitstellung von Alkoxysilan basierten hydrophilen Vernetzern. Zusätzlich sollen die wasserdispergierbaren Vernetzer, eine niedrige Viskosität aufweisen, sich gut in wässrigen Lackbindemitteln homogenisieren lassen und eine lange Verarbeitungszeit aufweisen.

Gelöst werden die Aufgaben mit einer Zusammensetzung nach Anspruch 1, einem Verfahren nach Anspruch 9 sowie der Verwendung nach Anspruch 12 oder 13.

Überraschenderweise wird die vorliegende Aufgabe gelöst durch die erfindungsgemäßen Reaktionsprodukte aus spezifischen Isocyanatoalkylalkoxysilanen und spezifischen CH-aziden Verbindungen, wobei genau solche hydrophilen Vernetzer mit niedriger Viskosität und guter Kompatibilität mit wässrigen Lackbindemitteln erhältlich sind. Überraschenderweise wurde gefunden, dass die erfindungsgemäßen Systeme auch ohne Hydrophilierungsmittel bereits in Wasser oder wässrigen Bindemitteln dispergierbar sind.

Gegenstand der Erfindung ist eine Zusammensetzung umfassend
(i) mindestens einen hydrophilen Vernetzer der allgemeinen Formel (I) oder eine Mischung enthaltend mindestens zwei der hydrophilen Vernetzer der allgemeinen Formel (I),

   G¹YG¹ (I),

   wobei jedes G¹ unabhängig voneinander aus H und einer Gruppe der Formel (IIa)

   -(C=O)-NH-R-Si(OR')₃ (IIa)

   ausgewählt ist, wobei mindestens ein G¹ eine Gruppe der Formel (IIa)
   ist, und
(ii) Wasser,
   wobei R jeweils unabhängig einem aliphatischen (Cyclo)Alkylenrest entspricht, insbesondere mit 1 bis 10 C-Atomen, und R' jeweils unabhängig einen linearen, verzweigten oder cyclischen Alkylrest mit 1 bis 10 C-Atomen oder H darstellen kann, und
   wobei Y ausgewählt ist aus substituierten linearen, aliphatischen, (cyclo)-aliphatischen oder verzweigten aliphatischen Verbindungen mit mindestens 3 C-Atomen, die an einem C-Atom, insbesondere mindestens einem alpha-ständigen C-Atom zum C-H-aziden Kohlenstoffatom im Edukt der nachfolgenden Formel (III), mindestens eine elektronenziehende Gruppe oder mindestens einen elektronenziehenden Substituenten aufweisen, insbesondere umfasst die elektronenziehende Gruppe oder der Substituent mindestens ein elektronegativeres Atom als ein C-Atom.

Insbesondere wird der hydrophile Vernetzer der Formel (I) ausgewählt aus einem Vernetzer der Formel Ia und Ib,

(R'O)₃Si-R-NH-(C=O)-Y-(C=O)-NH-R-Si(OR')₃ (Ia)

(R'O)₃Si-R-NH-(C=O)-Y-H (Ib),

wobei R jeweils unabhängig einem aliphatischen (Cyclo)Alkylenrest mit 1 bis 10 C-Atomen entspricht, und R' jeweils unabhängig einen linearen, verzweigten oder cyclischen Alkylrest mit 1 bis 10 C-Atomen oder H darstellt, und
wobei Y ausgewählt ist aus substituierten linearen, aliphatischen, (cyclo)-aliphatischen oder verzweigten aliphatischen Verbindungen mit mindestens 3 C-Atomen, die an einem C-Atom mindestens eine elektronenziehende Gruppe oder mindestens einen elektronenziehenden Substituenten aufweisen.

Nach einer bevorzugten Ausführungsform ist das bivalente Y in Formel (I) jeweils monovalent mit den beiden Gruppen G¹ = -(C=O)-NH-R-Si(OR')₃ gemäß Formel (la) verbunden. Besonders bevorzugt sind die beiden Gruppen G¹ am gleichen C-Atom von Y kovalent gebunden.

In einer bevorzugten Ausführungsform enthalten die erfindungsgemäßen Zusammensetzungen eine Mischung aus mindestens zwei hydrophile Vernetzer der allgemeinen Formel I. Weiterhin bevorzugt ist der hydrophile Vernetzer eine Mischung aus mindestens zwei hydrophilen Vernetzern der Formeln (Ia) oder (Ib) oder eine Mischung aus jeweils einem hydrophilen Vernetzer der Formel (Ia) und (Ib).

Bevorzugt wird der mindestens eine hydrophile Vernetzer der Formel (I) oder die Mischung aus mindestens zwei hydrophilen Vernetzern der Formel (I) in der erfindungsgemäßen Zusammensetzung hergestellt, indem in einem ersten Schritt:
mindestens ein Isocyanatoalkylalkoxysilan der Formel (II) oder eine Mischung von mindestens zwei der Isocyanatoalkylalkoxysilane der Formel (II)

(R'O)₃Si-R-N=C=O (II)

mit einer
organofunktionellen C-H-aziden Verbindung der Formel (III)

HYH (III)

mit mindestens zwei aziden Wasserstoffatomen, umgesetzt wird, optional in Gegenwart eines Katalysators,
wobei in Formel (II) R jeweils unabhängig einem aliphatischen (Cyclo)Alkylenrest entspricht, insbesondere mit 1 bis 10 C-Atomen, und R' jeweils unabhängig einen linearen, verzweigten oder cyclischen Alkylrest mit 1 bis 10 C-Atomen darstellt, und
wobei die organofunktionelle C-H-azide Verbindung der Formel (III) eine substituierte lineare aliphatische, (cyclo)-aliphatische oder verzweigte aliphatische Verbindung mit mindestens 3 C-Atomen, insbesondere mit 3 bis 250 C-Atomen, bevorzugt mit 3 bis 100 C-Atomen ist, die an einem alpha-ständigen Kohlenstoffatom zum C-H-aziden C-Atom mindestens eine elektronenziehende Gruppe oder mindestens einen elektronenziehenden Substituenten aufweist. Bei unvollständiger Umsetzung des Isocyanatoalkylalkoxysilans der Formel (II) und der C-H-aziden Verbindung der Formel (III) entspricht eine Gruppe G¹ in Formel (I) demzufolge einem Wasserstoff entsprechen.

In einem oder mehreren optionalen weiteren Verfahrensschritten können nicht umgesetzte Isocyanatoalkylalkoxysilane der allgemeinen Formel (II) abgetrennt werden oder die NCO-Gruppen in den Isocyanatoalkylalkoxysilanen der Formel (II) mit mindestens einem Alkohol zu entsprechenden Urethanen umgesetzt werden.

Optional umfasst eine Zusammensetzung zusätzlich Umsetzungsprodukte von Isocyanatoalkylalkoxsilanen der Formel (II) mit einer Hydroxy-funktionellen Kohlenwasserstoffverbindung. Vorzugsweise entspricht das Umsetzungsprodukt von Isocyanatoalkylalkoxsilanen der Formel (II) mit einer Hydroxy-funktionellen Kohlenwasserstoffverbindung einem entsprechenden Urethan, wobei die Hydroxy-funktionelle Kohlenwasserstoffverbindung vorzugsweise ein Alkohol mit 1 bis 10 C-Atomen ist.

Das Y in Formel (I) und in Formel (III) kann dabei ausgewählt sein aus
(i) substituierten linearen, aliphatischen, (cyclo)-aliphatischen oder verzweigten aliphatischen Verbindungen mit mindestens 3 C-Atomen, insbesondere mit 3 bis 250 C-Atomen, bevorzugt mit 3 bis 100 C-Atomen, die an mindestens einem alpha-ständigen C-Atom zu dem C-Atom das mit einer oder zwei Gruppen der allgemeinen Formel (IIa) substituiert ist, mindestens eine elektronenziehende Gruppe oder mindestens einen elektronenziehenden Substituenten aufweisen, und/oder
(ii) substituierten linearen, aliphatischen, (cyclo)-aliphatischen oder verzweigten aliphatischen Verbindungen mit mindestens 3 C-Atomen, insbesondere mit 3 bis 250 C-Atomen, bevorzugt mit 3 bis 100 C-Atomen, wobei Y an zwei unterschiedlichen alpha-ständigen C-Atomen die zu dem C-Atom, das mit einer oder zwei Gruppen der allgemeinen Formel (IIa) substituiert ist, jeweils mindestens eine elektronenziehende Gruppe oder mindestens einen elektronenziehenden Substituenten aufweist.

Bei der elektronenziehenden Gruppe kann es sich um Gruppen beliebiger Atome handeln, die durch induktive (z. B. -I-Effekt) und/oder mesomere Effekte (z. B. -M-Effekt) zu einer CH-Azidität des alpha-ständigen Wasserstoffes führen. Die elektronenziehenden Substituenten oder die elektronenziehenden Gruppen weisen vorzugsweise mindestens ein elektronegativeres Atom als ein C-Atom auf und können wie folgt definiert sein:
Die elektronenziehende Substituenten sind vorzugsweise ausgewählt aus der Gruppe, bestehend aus Halogen, vorzugsweise Cl, Br, F, Sauerstoff und/oder Stickstoff. Die elektronenziehenden Gruppen sind vorzugsweise ausgewählt aus der Gruppe, bestehend aus Gruppen, die einen oder mehrere der vorgenannten elektronenziehenden Substituenten umfassen, insbesondere Ester-, Sulfoxid-, Sulfon-, Nitro-, Phosphonat-, Nitril-, Isonitril-, Amid- und Carbonyl-Gruppen.

Besonders bevorzugt können organofunktionelle C-H-azide Verbindungen der Formel (III) oder Y in der allgemeinen Formel (I) Malonester oder β-Ketoester oder ein Derivat davon sein, insbesondere Ester von Alkoholen und/oder Hydroxy-Polyethern.

In den Formeln (I), (Ia) und/oder (Ib), der Zusammensetzung kann R' jeweils unabhängig einen linearen, verzweigten oder cyclischen Alkylrest mit 1 bis 10 C-Atomen oder H darstellen, wobei nach einer Alternative von allen R' in Formel (I) mindestens zwei R' jeweils unabhängig voneinander ein linearer, verzweigter oder cyclischer Alkylrest mit 1 bis 10 C-Atomen sind, insbesondere wenn der Gehalt an Wasser kleiner gleich 1 Gew.-% bevorzugt kleiner gleich 0,5 Gew.-%, besonders bevorzugt von kleiner gleich 0,1 Gew.-% in Bezug auf die Gesamtzusammensetzung von 100 Gew.-% beträgt. Vorzugsweise sind alle Alkyl-Reste R' in den Formel (I), (Ia), (II) und (IIa) gleich. Weiterhin können die Reste R' unabhängig voneinander ausgewählt sein aus der Gruppe bestehend aus Methyl, Ethyl, und i-Propyl, vorzugsweise Ethyl und Methyl, besonders bevorzugt Methyl, da die resultierenden Verbindungen dann besonders reaktiv sind.

Vorzugsweise ist R in den Formeln (I), (Ia), (Ib) und (1Ia) jeweils unabhängig voneinander ein aliphatischer (Cyclo)Alkylenrest. Unter (Cyclo)Alkylenresten sind dabei gleichermaßen Cycloalkylenreste und Alkylenreste zu verstehen, insbesondere Cycloalkylenreste oder Alkylenreste mit 1 bis 10 C-Atomen. Bevorzugt sind bivalente Alkylenreste mit 1 bis 10 C-Atomen, besonders bevorzugt ist ein Alkylenrest, ausgewählt aus der Gruppe, bestehend aus Methylen, Ethylen, Propylen, Butylen, Heptylen und Hexylen.

Die organofunktionelle C-H-azide Verbindungen der Formel (III) oder Y in der allgemeinen Formel (I) können insbesondere ausgewählt sein aus β-Di-funktionalisierten Verbindungen, umfassend β-Di-Ester-, β-Di-Nitril-, cyclische β-Di-Ketone, β-Ketoester, β-Di-Nitro-, β-Di-Sulfoxid-, β-Di-Sulfon-, β-Di-Phosphonato, β-Di-Isonitril-Verbindungen oder β-Di-funktionalisierte Verbindungen, umfassend mindestens zwei elektronenziehende Gruppen oder elektronenziehende Substituenten, vorzugsweise Nitril-, Carbonyl, Ester- oder Amid-Gruppen, weiterhin bevorzugt Nitril-, Carbonyl-oder Ester-Gruppen, besonders bevorzugt Ester-Gruppen oder Ester-Gruppen in Kombination mit Ketogruppen, wie Acetylacetonat/Acetoessigester. Bevorzugt ist die organofunktionelle C-H-azide Verbindung der Formel (III) oder Y in der allgemeinen Formel (I) eine β-Di-funktionalisierte Verbindung, besonders bevorzugt sind β-Dicarbonyl-Verbindungen, wie β-Diketone, β-Diester, β-Ketoester, Acetoacetylester oder Acetylacetone.

Besonders bevorzugte organofunktionelle C-H-azide Verbindungen der Formel (III) sind 1,3-Cyclohexandion, Dimedon, Malonsäurediester, Acetoacetyessigester sowie Derivate davon mit Polyethern.

Erfindungsgemäß ist es besonders bevorzugt, die hydrophilen Vernetzer der allgemeinen Formel (I) oder eine Mischung enthaltend mindestens zwei der hydrophilen Vernetzer der allgemeinen Formel (I) in wässrigen Zusammensetzungen zu verwenden, insbesondere in wässrigen Dispersionen, vorzugsweise in Emulsionen.

Die erfindungsgemäße Zusammensetzung kann vorzugsweise 1 bis 99,99 Gew.-% eines Vernetzers der Formel (I) oder einer Mischung von mindestens zwei Vernetzern der Formel (I), die optional Umsetzungsprodukte von Isocyanatoalkylalkoxsilanen der Formel (II) mit einer Hydroxy-funktionellen Kohlenwasserstoffverbindung oder einer C-H-aziden Verbindung der Formel (III) sind, und Wasser in einer Menge von 0,01 Gew.-% bis 99 Gew.-%, und optional weitere nachfolgend definierte Komponenten (iii), (iv), (v) und/oder (vi) umfassen, wobei die Gesamtzusammensetzung 100 Gew.-% beträgt. In einer bevorzugten Ausführungsform umfasst die Zusammensetzung 95 bis 99,99 Gew.-%, insbesondere 99,00 bis 99,99 Gew.-% des Vernetzers der Formel (I) oder einer Mischung von mindestens zwei Vernetzern der Formel (I), und 0,01 bis 5 Gew.-%, insbesondere 0,01 bis 1,00 Gew.-% Wasser, wobei die Gesamtzusammensetzung 100 Gew.-% beträgt. Bevorzugt umfasst die Zusammensetzung einen definierten Gehalt an Wasser, um insbesondere die Hydrolyse der Alkoxygruppen zu steuern.

Gleichfalls Gegenstand der Erfindung sind nach einer besonders bevorzugten Ausführungsform Zusammensetzungen erhalten oder erhältlich durch eine Umsetzung von mindestens einem Isocyanatoalkylalkoxysilan der Formel (II) oder eine Mischung von mindestens zwei der Isocyanatoalkylalkoxysilane der Formel (II) mit mindestens einer organofunktionellen C-H-aziden Verbindung der Formel (III) oder einer Mischung davon, wobei die mindestens eine C-H-azide Verbindung der folgenden allgemeinen Formel (IV) entspricht, 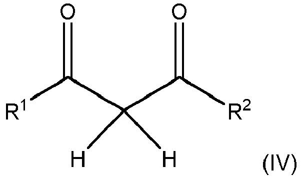 wobei R¹ und R² jeweils unabhängig voneinander ausgewählt sind aus - H, -(CH₂)ᵣR⁴, mit r = 0 bis 12, vorzugsweise mit r = 1 bis 8, -OR⁵ und -NHR⁵,
wobei R⁴ und R⁵ jeweils unabhängig voneinander aus der Gruppe, bestehend aus H, einer optional ein Heteroatom, insbesondere -O- und/oder -N-, enthaltenden Alkylgruppe mit 1 bis 18 C-Atomen, einer optional ein Heteroatom, insbesondere -O- und/oder -N-, enthaltenden Cycloalkylgruppe mit 3 bis 18 C-Atomen, einer optional ein Heteroatom, insbesondere -O- und/oder -N-, enthaltenden Alkylarylgruppe mit 6 bis 18 C-Atomen, einer bivalenten Alkylengruppe mit 1 bis 10 C-Atomen, einer Alkylenoxidgruppe mit mindestens 4 C-Atomen, insbesondere mit 4 bis 16 C-Atomen, einer Polyethergruppe, wie Polyalkylenoxidpolyether, einer Polyhydroxy-funktionelle Gruppe mit 1 bis 18 C-Atomen, einer -O- und/oder -N- enthaltenden Heteroaromatgruppe mit 5 bis 18 C-Atomen und einer -O- oder -NH-Polyethergruppe, der eine oder mehrere verschiedene Polyglykoleinheiten (CH₂CH₂O)ₚR"enthält, wovon vorzugsweise mindestens eine endständig angeordnet ist, wobei p 4 bis 20 und R" ein Alkyl-Rest mit 1 bis 18 C-Atomen oder H ist, ausgewählt wird.

Bevorzugte Polyether gemäß R⁴ und/oder -OR⁵ können Polyethylenglycol-Polyether wie -O-(CH₂CH₂O)ₓ-R* mit x = 2 bis 100, insbesondere 2 bis 50, oder Polypropylenglycol-Polyether, wie auch O-(CH₂CH₃CH₂O)_{y}-R* oder O-(CH₂CH₂CH₃O)_{y}-R* mit y = 2 bis 100, insbesondere 2 bis 50 sein.

Weiterhin bevorzugt können R¹ und R² in Formel (IV) ausgewählt sein aus -OR⁵ oder -NHR⁵, wobei R⁵ wie vorstehend definiert ist. Besonders bevorzugt ist R¹ ausgewählt aus -OR⁵, wobei R⁵ wie vorstehend definiert ist und R² ist ausgewählt aus - H, -(CH₂)ᵣR⁴, mit r = 0 bis 12, insbesondere r = 1 bis 8, wobei R⁴ wie vorstehend definiert ist und -NHR⁵, wobei - R⁵ wie vorstehend definiert.

Unter den C-H-aziden Verbindungen, insbesondere der Formel (IV), die eine Esterfunktion -CO-OR⁵ aufweisen, sind Ester mit R⁵ = Alkyl, Aryl bevorzugt und Ester mit R⁵ = -CH₃, -C₂H₅, -C₃H₇ besonders bevorzugt. Bevorzugt sind auch C-H-azide Verbindungen mit Esterfunktion CO-OR⁵, insbesondere der Formel (IV), bei der sich die Einheit OR⁵ von Alkoholen HOR⁵ ableitet, vorzugsweise mit R⁵' = E, wobei der entsprechende Alkohol E-OH ein Hydrophilierungsmittel E mit OH-Funktion ist.

Beispiele für geeignete nicht-ionische Hydrophilierungsmittel E mit OH-Funktion sind Polyalkylenoxidpolyetheralkohole, wie sie in an sich bekannter Weise durch Alkoxylierung geeigneter Startermoleküle zugänglich sind. Als Startermolekül für Polyalkylenoxidpolyetheralkohole können beliebige einwertige Alkohole des Molekulargewichtsbereichs 32 bis 150, wie sie beispielsweise auch gemäß EP 0 206 059 Verwendung finden, eingesetzt werden. Besonders bevorzugt wird Methanol als Startermolekül verwendet. Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Bei den Polyalkylenoxidpolyetheralkoholen handelt es sich entweder um reine Polyethylenoxidpolyether oder um gemischte Polyalkylenoxidpolyether, deren Alkylenoxideinheiten zu mindestens 70 Mol-%, vorzugsweise zu mindestens 80 Mol-% aus Ethylenoxideinheiten bestehen.

Beispiele für die beim erfindungsgemäßen Verfahren eingesetzten Hydrophilierungsmittel E mit OH-Funktion umfassend Polyalkylenoxidpolyetheralkohole sind Polyglykol M350, M350 PU (niedrigerer Wassergehalt als M350), M500, M500 PU, M750 und M1000 der Firma Clariant (jeweils lineare, mono-hydroxy-funktionelle Polyethylenglycol Monomethylether mit Molmasse ca. 350 g/mol, 500 g/mol, 750 g/mol oder 1000 g/mol). Bevorzugt werden lineare, mono-hydroxy-funktionelle Polyethylenglycol Monomethylether mit Molmasse ca. 350 g/mol und 500 g/mol eingesetzt.

Ein weiteres Beispiel für die beim erfindungsgemäßen Verfahren eingesetzten Hydrophilierungsmittel E sind die in WO 2011/144644 A1 beschriebenen Hydrophilierungsmittel.

Eine C-H-azide Verbindung mit Esterfunktion CO-OR⁵ bei der die Einheit OR⁵ aus einem Hydrophilierungsmittel E-OH stammt, kann über die literaturbekannten Vorschriften zur Herstellung von Carbonsäureestern erhalten werden (z. B. Organikum, Berlin 1990, S. 402 ff.).

In besonders bevorzugten Zusammensetzungen entspricht der hydrophile Vernetzer der allgemeinen Formel (I) einem Vernetzer der Formel (Ic) oder (Id) oder einer Mischung aus einem Vernetzer der Formel (Ic) und einem Vernetzer der Formel (Id): 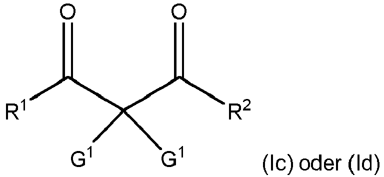 wobei in Formel (Ic) R¹ und R² unabhängig jeweils wie vorstehend definiert sind und beide G¹ jeweils unabhängig aus der Formel (IIa) ausgewählt sind, und in Formel (Id) R¹ und R² jeweils unabhängig wie vorstehend definiert sind und ein G¹ jeweils unabhängig aus der Formel (IIa) ausgewählt ist und ein G¹ ein Wasserstoff ist. Alternative Zusammensetzungen umfassen mindestens einen Vernetzer der Formel (Id) und optional einen Vernetzer der Formel (Ic).

Vorzugsweise ist R in den Formeln (Ic) und (Id) jeweils unabhängig voneinander ein aliphatischer (Cyclo)Alkylenrest. Unter (Cyclo)Alkylenresten sind dabei gleichermaßen Cycloalkylenreste und Alkylenreste zu verstehen, insbesondere Cycloalkylenreste oder Alkylenreste mit 1 bis 10 C-Atomen. Bevorzugt sind bivalente Alkylenreste mit 1 bis 10 C-Atomen, besonders bevorzugt ist ein Alkylenrest, ausgewählt aus der Gruppe, bestehend aus Methylen, Ethylen, Propylen, Butylen, Heptylen und Hexylen.

Ferner kann es besonders bevorzugt sein, wenn (i) eine organofunktionelle C-H-azide Verbindung der Formel (III) der allgemeinen Formel (IV) entspricht, und (ii) das mindestens eine Isocyanatoalkylalkoxysilan der Formel (II) oder die Mischung von mindestens zwei der Isocyanatoalkylalkoxysilanen der Formel (II) wobei R jeweils unabhängig voneinander einem linearen Alkylenrest mit 1 bis 4 C-Atomen entspricht, und R' jeweils unabhängig voneinander Methyl oder Ethyl sein kann, vorzugsweise Methyl.

Bevorzugt ist das Isocyanatoalkylalkoxysilan der Formel (II) ausgewählt aus Isocyanatopropyltriethoxysilan und Isocyanatopropyltrimethoxysilan, besonders bevorzugt ist Isocyanatopropyltrimethoxysilan. Bevorzugte Isocyanatoalkyltrialkoxysilane der Formel (II) sind Isocyanatomethyltrimethoxysilan, Isocyanatomethyltriethoxysilan, Isocyanatomethyltriisopropoxysilan, 2-Isocyanatoethyltrimethoxysilan, 2-Isocyanatoethyltriethoxysilan, 2-Isocyanatoethyltri-iso-propoxysilan, 3-Isocyanato-n-propyltrimethoxysilan, 3-Isocyanato-n-propyltriethoxysilan, 3-Isocyanato-n-propyltri-iso-propoxysilan, 4-Isocyanato-n-butyltrimethoxysilan, 4-Isocyanato-n-butyltriethoxysilan und 4-Isocyanato-n-butyltri-iso-propoxysilan. Ganz besonders bevorzugt ist 3-Isocyanato-n-propyltrimethoxysilan.

Die erfindungsgemäßen hydrophilen Vernetzer, insbesondere der allgemeinen Formel (I), bevorzugt mindestens einer der Formeln (Ia), (Ib), (Ic) und/oder (Id), sind vorzugsweise niedrigviskos und können insbesondere eine Viskosität von kleiner 1000 mPas aufweisen, vorzugsweise von 20 mPas bis kleiner 1000 mPas, bevorzugt kleiner 500 mPas, besonders bevorzugt kleiner 100 mPas. Gleichfalls ist es bevorzugt, wenn eine Mischung der vorgenannten hydrophilen Vernetzer eine entsprechende Viskosität von kleiner 1000 mPas aufweist, insbesondere von 20 mPas bis kleiner 1000 mPas. Die Bestimmung der Viskosität kann nach DIN EN ISO 3219 (01.10.1994) bei 23°C +/- 0,2 °C an den Geräten "Anton Paar MCR 301" oder "Anton Paar MCR 302" durchgeführt werden. Nach der genannten Methode können Viskositäten von 20 - 200.000 mPas gemessen werden.

In einer bevorzugten Ausführungsform können die erfindungsgemäßen Zusammensetzungen insbesondere zusätzlich
(iii) mindestens ein Bindemittel oder eine Mischung von mindestens zwei Bindemitteln,
(iv) optional bis zu 4 Gew.-% mindestens eines Katalysators,
(v) optional organische Lösemittel, und
(vi) optional Hilfs- und/oder Zusatzstoffe umfassen.

Entsprechende Zusammensetzungen können insgesamt
(i) 1 bis 20 Gew.-% mindestens eines hydrophilen Vernetzer der Formeln (I), (Ia) und/oder (Ib) oder Mischungen von mindestens zwei der vorgenannten Vernetzer, und optional Umsetzungsprodukte von Isocyanatoalkylalkoxsilanen der Formel (II) mit einer Hydroxy-funktionellen Kohlenwasserstoffverbindung, und optional der Formel (III), insbesondere der Formel (IV),
(ii) 0,01 bis 50 Gew.-%, insbesondere 5 bis 50 Gew.-% Wasser,
(iii) 0 bis 30 Gew-%, insbesondere 0,5 bis 30 Gew.-% eines Bindemittels oder einer Mischung von mindestens zwei Bindemitteln, vorzugsweise umfassend Polyurethane,
(iv) 0 bis 4 Gew.-%, insbesondere 0,01 bis 1 Gew.-% mindestens eines Katalysators,
(v) 0 bis 30 Gew.-% eines organischen Lösemittels, und
(vi) 0 bis 10 Gew.-% Hilfs- und/oder Zusatzstoffe
umfassen, wobei die Gesamtzusammensetzung 100 Gew.-% beträgt. Das R' in Formel (I), (la) und/oder (Ib) entspricht vorzugsweise jeweils unabhängig voneinander einem linearen, verzweigten oder cyclischen Alkylrest mit 1 bis 10 C-Atomen oder einem H. Je nach Wassergehalt liegt der hydrophile Vernetzer mehr oder weniger hydrolysiert vor. Die Komponenten (i) bis (vi) ergänzen sich immer auf 100 Gew.-%.

Diese Zusammensetzungen können als Beschichtungsmittel verwendet werden, welche vorzugsweise bei Temperaturen von 80 bis 180 °C härtbar sind.

Das Bindemittel oder die Mischung von mindestens zwei Bindemitteln (iii) ist vorzugsweise ausgewählt aus der Gruppe, bestehend aus einem mindestens eine Hydroxyl-Gruppe aufweisenden Polymer und einem mindestens eine Hydroxyl-Gruppe aufweisenden Harz, vorzugsweise mindestens einem eine Hydroxyl-Gruppe aufweisenden Acrylatpolymer, wie Polyacrylat, vorzugsweise mit einem Molekulargewicht im Bereich von 1000 bis 10000, oder optional einem Urethan-Gruppen aufweisenden und mindestens eine Hydroxyl-Gruppe aufweisenden Polyesterharz.

Ebenfalls Gegenstand der Erfindung ist ein Verfahren zur Herstellung einer Zusammensetzung umfassend einen hydrophilen Vernetzer der allgemeinen Formel (I) und Wasser nach den Alternativen:
A) Herstellen mindestens eines hydrophilen Vernetzers der allgemeinen Formel (I), wie vorstehend definiert, oder einer Mischung von hydrophilen Vernetzern der allgemeinen Formel (I), wie vorstehend definiert, indem in einem ersten Schritt:
   mindestens ein Isocyanatoalkylalkoxysilan der Formel (II), wie vorstehend definiert, oder eine Mischung von mindestens zwei der Isocyanatoalkylalkoxysilane der Formel (II), wie vorstehend definiert, mit einer organofunktionellen C-H-aziden Verbindung der Formel (III), wie vorstehend definiert, umgesetzt wird, wobei
   optional in einem nachfolgenden Schritt nicht umgesetztes Isocyanatoalkylalkoxysilan der Formel (II), wie vorstehend definiert, abgetrennt oder mit einer Hydroxy-funktionellen Kohlenwasserstoff-Verbindung umgesetzt wird,
   wodurch eine Zusammensetzung, umfassend mindestens einen hydrophilen Vernetzer der allgemeinen Formel (I), wie vorstehend definiert, oder eine Mischung von mindesten zwei der hydrophilen Vernetzer der Formel (I), wie vorstehend definiert, erhalten wird; und
   danach die Zusammensetzung, umfassend mindestens einen hydrophilen Vernetzer der allgemeinen Formel (I), wie vorstehend definiert, oder einer Mischung von mindestens zwei der hydrophilen Vernetzer der Formel (I), wie vorstehend definiert, und Wasser durch Mischen der Zusammensetzung mit Wasser hergestellt wird,
   oder
B) Mischen der Zusammensetzung umfassend mindestens einen hydrophilen Vernetzer der allgemeinen Formel (I) oder einer Mischung von mindestens zwei der hydrophilen Vernetzer der Formel (I), wie vorstehend definiert, mit Wasser.

Bei der Umsetzung des Isocyanatoalkylalkoxysilans der Formel (II) mit einer organofunktionellen C-H-aziden Verbindung der Formel (III) kann optional ein Katalysator ausgewählt aus metallorganischen Salzen, insbesondere von Carbonsäuren und/oder Alkoholen, wie beispielsweise Metallcarboxylaten und/oder Metallalkoholaten, insbesondere Zinkethylhexanoat und/oder Octylglycoltitanat eingesetzt werden.

Nach einer bevorzugten Ausführungsform kann in dem Verfahren die Umsetzung von Isocyanatoalkylalkoxysilan der Formel (II), wie vorstehend definiert, mit der organofunktionellen C-H-aziden Verbindung der Formel (III), wie vorstehend definiert, im molaren Verhältnis von 1,1 : 1 bis 100 : 1 erfolgen. Bevorzugt ist ein molares Verhältnis von 10 : 1 bis 1 : 1, besonders bevorzugt von 5 : 1 bis 1,5 : 1. Die Umsetzung kann bei 20 bis 200 °C erfolgen bis die theoretische NCO-Zahl entsprechend der molaren Umsetzung von zwei aziden Wasserstoffatomen der eingesetzten C-H-aziden Verbindung der Formel (III) mit dem eingesetzten Isocyanatoalkylalkoxysilan der Formel (II) erreicht ist. Daher ergibt sich die theoretische NCO-Zahl aus der eingesetzten molaren Menge an Isocyanatoalkylalkoxysilan der Formel (II), die im molaren Verhältnis von 2 : 1 mit den C-H-aziden Verbindungen im Idealfall reagieren. Die theoretische NCO-Zahl ist auf die Gesamtzusammensetzung in Gew.-% bezogen.

Des Weiteren kann es bevorzugt sein, wenn in dem Verfahren die Umsetzung von Isocyanatoalkylalkoxysilan der Formel (II), wie vorstehend definiert, mit der organofunktionellen C-H-aziden Verbindung der Formel (III), wie vorstehend definiert, in Gegenwart eines Katalysators erfolgt.

Entfernung von überschüssigem Isocyanat der Formel (II) im Verfahren: Nach der Umsetzung, bei der Isocyanatoalkylalkoxysilan der Formel (II) im Überschuss eingesetzt wurde, kann die abgekühlte Zusammensetzung optional weiter behandelt werden, indem optional vorhandenes Lösemittel sowie der Überschuss an monomeren Isocyanatoalkylalkoxysilan der Formel (II) abgetrennt werden, insbesondere bis ein Gehalt an Monomer von kleiner 2,0 Gew.-% vorliegt. Dies geschieht bevorzugt durch eine schonende Destillation, z. B. Kurzwegdestillation oder Dünnschichtdestillation, bevorzugt bei Temperaturen von 100 - 220 °C und Drücken von 0,001 mbar bis 100 mbar, insbesondere von 0,001 mbar bis 50 mbar. Bevorzugt ist eine Kurzwegdestillation oder Dünnschichtdestillation bei Temperaturen von 100 bis 180 °C und Drücken von 0,001 mbar bis 50 mbar, vorzugweise bei Drücken von 0,01 mbar bis 20 mbar. Die so erhaltenen Zusammensetzungen umfassend den erfindungsgemäßen hydrophilen Vernetzer haben einen Monomergehalt von < 2 Gew.-%, bevorzugt < 1 Gew.-% und besonders bevorzugt < 0,5 Gew.-%.

Umsetzung von überschüssigem Isocyanat der Formel (II) mit einer Hydroxy-funktionellen Kohlenwasserstoff-Verbindung: Wird das Isocyanatoalkylalkoxysilan der Formel (II) im Molverhältnis 2 : 1 mit der C-H-aziden Verbindung eingesetzt und erfolgt die Umsetzung nicht vollständig, also wird nicht ein NCO-Gehalt von 0 Gew.-% NCO erreicht, so können Restmengen an NCO-Gruppen aus der Verbindung der Formel (II) mit einer Hydroxy-funktionellen Kohlenwasserstoff-Verbindung, wie einem Alkohol, im Verhältnis NCO-Gruppen zu OH-Gruppen des der Hyxdroxy-funktionellen Kohlenwasserstoff-Verbindung, wie des Alkohols, von 0,8 : 1 bis 1,2 : 1, bevorzugt von 0,9 : 1 bis 1,1 : 1 umgesetzt, wobei die stöchiometrische Umsetzung, d.h. im Verhältnis 1 : 1 besonders bevorzugt ist. Bevorzugt erfolgt die Umsetzung der Restmenge an NCO-Gruppen aus der Verbindung der Formel (II) mit einem Alkohol bei Temperaturen im Bereich 30 bis 150 °C, insbesondere im Bereich von 50 bis 150 °C. Die Reaktion wird unter Ausschluss von Wasser durchgeführt. Bevorzugt wird die Reaktion lösemittelfrei durchgeführt.

Bevorzugte Alkohole sind lineare oder verzweigte Alkohole, deren Hydroxyfunktion an einem primären, sekundären oder tertiären Kohlenstoffatom gebunden ist, eingesetzt. Auch Diole oder Polyole können eingesetzt werden. Besonders bevorzugt sind Methanol, Ethanol, Propanol, Isopropanol, 1-Butanol, 2-Butanol, Pentanol, Ethyl-2-hexanol, 1-Hexanol. Ganz besonders bevorzugt sind Ethanol, Propanol und 1-Butanol

Umsetzung des Isocyanatoalkylalkoxysilans der Formel (II) mit einer organofunktionellen C-H-aziden Verbindung der Formel (III) optional in Gegenwart eines Katalysators: Generell kann die Umsetzung von Isocyanatoalkylalkoxysilan der Formel (II) und der CH-aziden Verbindung der Formel (III) in Gegenwart eines inerten Lösemittels oder ohne inertes Lösemittel erfolgen. Bevorzugt erfolgt die Umsetzung ohne Zugabe eines Lösemittels. In dem Verfahren werden dazu das Isocyanatoalkylalkoxysilan der Formel (II) und die C-H- azide Verbindung der Formel (III) in geeigneten Aggregaten gemischt und solange auf einer Reaktionstemperatur von 20 bis 220 °C, bevorzugt 40 bis100 °C gehalten, bis die theoretische NCO-Zahl entsprechend der vollständigen Reaktion von beiden CH-aziden Wasserstoffatomen der Formel (III) erreicht wird. Hauptprodukt ist dabei ein G¹-Y-G¹ Addukt.

Zur Beschleunigung der Reaktion können dem Fachmann bekannte Katalysatoren eingesetzt werden, wie bspw. metallorganische Salze. Beispiele dafür sind Dibutylzinndilaurat oder Zinkoctoat, oder auch metallfreie Basen wie z. B. Triethylamin oder Diazabicyclooctan. Der Katalysator kann in Mengen von 1 Gew.-% bis 0,0001 Gew.-% zugesetzt werden.

Die erfindungsgemäßen Zusammensetzungen sowie die hydrophilen Vernetzer der Formel (I) stellen wertvolle Ausgangsmaterialien zur Herstellung von Polyurethan- und/oder Acrylat-Kunststoffen dar, weil sie über intermolekulare Siloxan-Bindungen ein interpenetrierendes Netzwerk bilden oder über eine Umesterungsreaktion an die OH-Funktionen des Kunststoffes anbinden, wobei neue Si-O-Bindungen entstehen. Hierzu können die erfindungsgemäßen Zusammensetzungen umfassend die hydrophilen Vernetzer der Formel (I) oder Mischungen der hydrophilien Vernetzer der Formel (I) in Kombination mit in Wasser dispergierten Polyhydroxylverbindungen im Sinne von Beschichtungszusammensetzungen hergestellt werden, insbesondere als wässrigen Zweikomponenten-Systemen (2K) zur Umsetzung gebracht werden.

Der kumulierte Anteil der erfindungsgemäßen (i) hydrophilen Vernetzer der allgemeinen Formel (I), Ia und/oder Ib und optional Umsetzungsprodukten von Isocyanatoalkylalkoxsilanen der Formel (II) mit einer Hydroxy-funktionellen Kohlenwasserstoffverbindung, und (ii) optional Wasser in den Zusammensetzungen, die auch Beschichtungsmittelzusammensetzung sein können, beträgt bevorzugt von 1 bis 70 Gew.-%, insbesondere von 5 bis 70 Gew.-%, bevorzugt von 40 bis 60 Gew-% bezogen auf die Gesamtzusammensetzung von 100 Gew.-%.

Gegenstand der Erfindung ist auch eine Bindemittelzusammensetzung, umfassend:
(i) einen hydrophilen Vernetzer der allgemeinen Formel (I) oder eine Mischung von mindestens zwei der Vernetzer der Formel I

   G¹YG¹ (I),

   wobei G¹ aus -H und einer Gruppe der Formel (IIa)

   -(C=O)-NH-R-Si(OR')₃ (IIa),

   ausgewählt wird, wobei mindestens ein G¹ eine Gruppe der Formel (IIa) ist, wobei der hydrophile Vernetzer der Formel (I) vorzugsweise aus einem Vernetzer der Formeln Ia und Ib,

   (R'O)₃Si-R-NH-(C=O)-Y-(C=O)-NH-R-Si(OR')₃ (Ia)

   (R'O)₃Si-R-NH-(C=O)-Y-H (Ib)

   ausgewählt ist, wobei R' und R, wie vorstehend definiert sind,
(ii) optional Wasser
(iii) mindestens ein Bindemittel oder eine Mischung von mindestens zwei Bindemitteln, ,
(iv) optional bis 4 Gew.-% mindestens eines Katalysators
(v) optional organische Lösemittel
(vi) optional Hilfs- und/oder Zusatzstoffe.

Besonders bevorzugt werden die hydrophilen Vernetzer der Formel (I) als Vernetzer für eine oder mehrere (iii) Bindemittel oder Bindemittelkomponenten, welche in Wasser gelöste oder dispergierte Lackbindemittel oder Lackbindemittelkomponenten mit Hydroxyl-Gruppen sind, und bei der Herstellung von Beschichtungen unter Verwendung von wässrigen Beschichtungsmitteln auf Basis derartiger Bindemittel bzw. Bindemittelkomponenten verwendet. Die Vereinigung des Vernetzers der Formel (I), gegebenenfalls in emulgierter Form, mit den (iii) Bindemitteln bzw. (iii) Bindemittelkomponenten kann hierbei durch einfaches Verrühren vor der Verarbeitung der Beschichtungsmittel nach beliebigen Methoden, durch Verwendung von dem Fachmann bekannten mechanischen Hilfsmitteln oder auch unter Verwendung von Zweikomponenten-Spritzpistolen erfolgen.

In diesem Zusammenhang seien als Bindemittel (iii), insbesondere Lackbindemittel oder Lackbindemittelkomponenten beispielhaft die folgenden erwähnt: In Wasser gelöste oder dispergierte, Hydroxylgruppen aufweisende Polyacrylate, insbesondere solche des Molekulargewichtsbereichs 1000 bis 10000, die mit Alkoxysilan-funktionalisierten hydrophilen Vernetzer der Formel (I) als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Prinzipiell sind als Reaktionspartner für die erfindungsgemäßen hydrophilen Vernetzer der Formel (I) alle in Wasser gelösten oder dispergierten Bindemittel, die OH-Gruppen aufweisen, geeignet. Der Anteil der Bindemittel (iii) in der erfindungsgemäßen Bindemittelzusammensetzung beträgt bevorzugt 10 - 80 Gew.-%, insbesondere 20 bis 80 Gew.-% bezogen auf die Gesamtzusammensetzung.

Besonders bevorzugt ist der Katalysator (iv) ausgewählt aus der Gruppe C1) der organischen Carbonsäuren mit einem Schmelzpunkt oberhalb von 60 °C und/oder der Gruppe C2) der Tetraalkylammoniumcarboxylate.

Geeignete organische Carbonsäuren C1) mit einem Schmelzpunkt oberhalb von 60 °C (bei Normaldruck) sind bei Raumtemperatur nicht flüchtige Verbindungen. Beispiele vorteilhaft einzusetzender Carbonsäuren sind Salicylsäure, Benzoesäure, Citronensäure, Isophthalsäure, Phthalsäure, Terephthalsäure und/oder Trimellithsäure. Bevorzugt werden im Rahmen der vorliegenden Erfindung Salicylsäure und Benzoesäure verwendet.

Zur Gruppe der Tetraalkylammoniumcarboxylate C2), die als Katalysator eingesetzt werden können, gehören insbesondere Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und/oder Tetrabutylammoniumbenzoat. Die genannten Tetraalkylammoniumcarboxylate können allein oder in Mischungen zugesetzt werden. Bevorzugt werden Tetraethylammoniumbenzoat und/oder Tetrabutylammoniumbenzoat eingesetzt.

Der Katalysator in den erfindungsgemäßen Bindemittelzusammensetzungen, die als Beschichtungsmitteln verwendet werden können, kann allein aus einer oder mehreren Verbindungen der vorgenannten Gruppen C1) oder C2) bestehen, es können aber auch beliebige Mischungen der Katalysatoren aus den Gruppen C1) und C2) eingesetzt werden. Derartige Mischungen aus C1) und C2) weisen insbesondere ein Verhältnis von 9 : 1 bis 1 : 9 (m/m) auf. Vorzugsweise beträgt der Anteil des Katalysators bis zu 4 Gew.-%, bezogen auf das Beschichtungsmittel, vorzugsweise 0,1 bis 4 Gew.-%.

Die erfindungsgemäße Zusammensetzung, die als Beschichtungsmittel verwendet werden kann, kann zusätzlich in der Lacktechnologie bekannte (vi) Hilfsstoffe und/oder Zusatzstoffe, wie Stabilisatoren, Lichtschutzmittel, Katalysatoren, Füllstoffe, Pigmente, Verlaufsmittel oder Rheologiehilfsmittel, wie z. B. sog. "sag control agents", Mikrogele oder pyrogenes Siliciumdioxid, in typischen Konzentrationen enthalten. Falls erforderlich, können als Hilfsstoffe und/oder Zusatzstoffe auch in der Lacktechnologie übliche anorganische oder organische Farb- und/oder Effektpigmente eingearbeitet werden.

Die Hilfsstoffe und/oder Zusatzstoffe (vi) sind im Falle von pigmentfreien Zusammensetzungen, insbesondere Beschichtungsmitteln, d.h. Klarlacken, vorzugsweise in Mengen von 0,5 bis zu 8 Gew.-%, insbesondere von 1 bis 6 %, bezogen auf die Gesamtzusammensetzung von 100 Gew.-%, insbesondere bezogen auf das Beschichtungsmittel, enthalten. Im Falle von pigment- und/oder füllstoffhaltigen Beschichtungsmitteln kann der Gehalt von Hilfsstoffen und/oder Zusatzstoffen 5 bis 80 Gew.-%, insbesondere 10 bis 70 Gew.-% in der Gesamtzusammensetzung von 100 Gew.-% betragen, insbesondere bezogen auf das Beschichtungsmittel.

Weiterhin kann die Zusammensetzung organische Lösemittel (v) enthalten. Geeignete organische Lösemittel sind z. B. Ketone, Ester oder Alkohole.

Die Lösemittel können vorzugsweise in Mengen von 10 bis zu 50 Gew.-% bezogen auf die Gesamtzusammensetzung von 100 Gew.-% enthalten sein, insbesondere in dem erfindungsgemäßen Beschichtungsmittel. Die Menge des organischen Lösemittels oder einer Mischung davon orientiert sich an der einzustellenden Applikationsviskosität des Beschichtungsmittels.

Die Summe aller Anteile der Komponenten (i), (ii), (iii), (iv), (v) und/oder (vi) beträgt 100 Gew.-%. Bevorzugt bestehen die erfindungsgemäßen Beschichtungsmittelzusammensetzungen aus den genannten Komponenten (i) bis (vi).

Verwendung der Zusammensetzung umfassend hydrophile Vernetzer der Formel (I) in Gegenwart eines nichtfunktionalisierten Harzes: Auch in nichtfunktionellen wässrigen Lackbindemitteln können die erfindungsgemäßen hydrophilen Vernetzer der Formel oder die erfindungsgemäßen Zusammensetzungen in untergeordneten Mengen zur Erzielung ganz spezieller Eigenschaften, beispielsweise als Additiv zur Haftverbesserung, zugemischt werden. Selbstverständlich können die erfindungsgemäßen hydrophilen Vernetzer der Formel (I) auch in mit aus der Polyurethanchemie an sich bekannten blockierten Polyisocyanaten in Kombination mit den oben genannten wässrigen Lackbindemitteln oder Lackbindemittelkomponenten im Sinne von wässrigen Einkomponenten-PUR-Einbrennsystemen (1 K-PUR) eingesetzt werden.

Ferner ist Gegenstand der Erfindung die Verwendung des hydrophilen Vernetzers der Formel (I) oder Mischungen der Vernetzer der Formel (I) oder der Zusammensetzung als Vernetzerkomponente, in einem wasserlöslichen oder in wasserdispergierbaren Lackbindemittel oder Lackbindemittelkomponenten, insbesondere als eine Komponente eines 2K-Polyurethan-Systems, in einem wasserlöslichen oder in wasserdispergierbaren Beschichtungsmittel oder einer - beschichtungsmittel-Komponente, zur Herstellung von Polyurethan- und/oder Acrylat-Kunststoffen, oder mit blockierten Polyisocyanaten, in wässrigen Einkomponenten Polyurethan-Einbrennsystemen (1 K-PUR). Gleichfalls kann die Zusammensetzung oder ein Binde- oder Beschichtungsmittel enthaltend die Zusammensetzung verwendet werden zur Behandlung von beliebigen Substraten basierend auf Metallen, Legierungen, Holz, Glas, Stein, keramischen Materialien, Hybridmaterialen, Beton, harten Kunststoffen, flexiblen Kunststoffen Textilien, Leder und/oder Papier, die vor der Beschichtung gegebenenfalls auch mit üblichen Grundierungen versehen werden können.

Gegenstand der Erfindung ist auch die Verwendung des hydrophilen Vernetzers der Formel (I) oder der Zusammensetzung umfassend mindestens einen hydrophilen Vernetzer der Formel (I) zur Herstellung von Polyurethan-Kunststoffen, insbesondere als Vernetzer für wasserlösliche oder wasserdispergierbare Lackbindemittel, Klebstoffbindemittel, oder Dichtstoffbindemittel oder Bindemittel-Komponenten mit oder ohne Hydroxyl-Gruppen, insbesondere als Vernetzer für wasserlösliche oder wasserdispergierbare Lackbindemittel oder Lackbindemittelkomponenten, insbesondere auch für 2K-PUR-Systeme zur Herstellung von Überzügen unter Verwendung von wässrigen Beschichtungsmitteln auf Basis derartiger Bindemittel oder Bindemittelkomponenten, insbesondere auch für 2K-PUR-Systeme

Bei der erfindungsgemäßen Verwendung als Vernetzerkomponente für wässrige Lackbindemittel werden die erfindungsgemäßen Zusammensetzungen, insbesondere die hydrophilen Vernetzer der Formel (I), im allgemeinen in Mengen von 0,5 Gew.-% bis 20 Gew.-%, bevorzugt von 2,5 bis 15 Gew.-%, besonders bevorzugt von 8 Gew.-% bis 12 Gew.-% und optional mit 0 bis 60 Gew.-%, insbesondere 1 bis 50 Gew.-% Wasser in Bezug auf die Gesamtzusammensetzung des Lackbindemittels mit 100 Gew.-% eingesetzt.

Im Allgemeinen können die Zusammensetzungen, die als wässrige Beschichtungsmittel formuliert sind, denen gegebenenfalls die auf dem Lacksektor üblichen Hilfs- und Zusatzmittel, wie z. B. Verlaufshilfsmittel, Farbpigmente, Füllstoffe, Mattierungsmittel oder Emulgatoren, zugegeben werden können, schon bei Raumtemperaturtrocknung gute lacktechnische Eigenschaften aufweisen. Selbstverständlich lassen sie sich jedoch auch unter forcierten Bedingungen bei erhöhter Temperatur bzw. durch Einbrennen bei Temperaturen bis 260 °C trocknen.

Aufgrund ihrer hervorragenden Dispergierbarkeit oder Emulgierbarkeit in Wasser, die eine homogene, besonders feinteilige Verteilung in wässrigen Lackbindemitteln ermöglicht, führt die Verwendung der erfindungsgemäßen Zusammensetzungen umfassend hydrophile Vernetzer der Formel (I) als Vernetzerkomponente in wässrigen Polyurethanlacken zu Beschichtungen mit hervorragenden optischen Eigenschaften, insbesondere hohem Oberflächenglanz, Verlauf und hoher Transparenz und hoher Flexibilität.

Neben der Verwendung als Vernetzerkomponenten für wässrige 2K-PUR-Lacke eignen sich die Zusammensetzungen umfassend hydrophile Vernetzer der Formel (I) hervorragend als Vernetzer für wässrige Dispersionsklebstoffe, Leder- und Textilbeschichtungen oder Textildruckpasten, als AOX-freie Papierhilfsmittel oder auch als Zusatzmittel für mineralische Baustoffe, beispielsweise Beton- oder Mörtelmassen.

Außerdem werden die Zusammensetzungen umfassend hydrophile Vernetzer der Formel (I) aufgrund ihrer hervorragenden Dispergierbarkeit oder Emulgierbarkeit in Wasser auch als Zusatzstoffe in wässrigen Polyurethandispersionen verwendet.

Die Zusammensetzungen umfassend hydrophile Vernetzer der Formel (I), Verfahren zu deren Herstellung sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnehmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

### Einsatzstoffe:

Bona Traffic HD: Bindemittelkomponente der 2-Komponentigen Polyurethan-Dispersion in Wasser (Bona Vertriebsgesellschaft mbH Deutschland, ca. 32 Gew.-% Feststoffgehalt)
Bona Traffic Hardener: hydrophiles, aliphatisches Polyisocyanat, als Härterkomponente für Bona Traffic HD (Bona Vertriebsgesellschaft mbH Deutschland)
Polyglykol M500 PU: linearer, mono hydroxy-functioneller Polyethylenglycol Monomethylether
(Clariant International Ltd.)
Vestanat® EP Cat 11 H: Tetraethylammoniumbenzoat in Butanol (Evonik Resource Efficiency GmbH)

Viskosität: DIN EN ISO 3219 (01.10.1994) bei 23°C +/- 0,2 °C, Gerät: Anton Paar MCR 301 oder Anton Paar MCR 302. Es können Viskositäten von 20 - 200.000 mPas gemessen werden.

### 1. Herstellung hydrophiler Vernetzer

### Beispiel 1: hydrophiler Vernetzer V1

In einem Dreihalskolben mit Rückflusskühler wurden 214,4 g Isocyanatopropyltrimethoxysilan (IPMS), 82,6 g Diethylmalonat und 3,0 g Zinkethylhexanoat vorgelegt und mit Stickstoff abgedeckt. Unter Rühren wurde auf 125 °C erhitzt und dann innerhalb von 7 h kontinuierlich auf 70 °C abgekühlt. Bei 70 °C wurde weitere 17 h gerührt bis ein NCO-Gehalt von 2,63 Gew.-% erreicht wurde. Dann wurden 14,7 g Butanol und 0,01 Gew.-% DBTL hinzugefügt und 10h bei 60 °C erhitzt, bis ein NCO-Gehalt von < 0,1 Gew.-% NCO erreicht wurde. Nach Abkühlen auf Raumtemperatur erhält man den erfindungsgemäßen hydrophilen Vernetzer V1 als klare, gelbe Flüssigkeit mit einer Viskosität von 53 mPas (bei 23°C).

### Beispiel 2: hydrophiler Vernetzer V2

Stufe 1 (hydrophiles Malonat): In einer Apparatur mit Destillationsbrücke und dauerhafter Stickstoffspülung wurden 59,9 g Diethylmalonat, 180,7 g Polyglykol M500 und 0,048 g Octylglycoltitanat (OGT) vorgelegt. Unter Rühren wurde auf 100 - 120 °C aufgeheizt bis sich 17 g Ethanol in der Destillatvorlage gesammelt haben. Bei dem im Sumpf verbliebenen Produkt handelt es sich um 223,4 g des hydrophilen Malonats, welches in der folgenden Stufe weiter umgesetzt wird.

Stufe 2: In einem Dreihalskolben mit Rückflusskühler wurden 155,4 g Isocyanatopropyltrimethoxysilan (IPMS), 223,4 g hydrophiles Malonat aus Stufe 1 und 4,0 g Zinkethylhexanoat vorgelegt und mit Stickstoff abgedeckt. Unter Rühren wurde auf 125 °C erhitzt und dann innerhalb von 7 h kontinuierlich auf 70 °C abgekühlt. Bei 70 °C wurde weitere 17 h gerührt bis ein NCO-Gehalt von 0,64 Gew.-% erreicht wurde. Dann wurden 4,0 g Butanol und 0,36 g DBTL hinzugefügt und 10h bei 60 °C erhitzt, bis ein NCO-Gehalt von < 0,1 Gew.-% NCO erreicht wurde. Nach Abkühlen auf Raumtemperatur erhält man den erfindungsgemäßen hydrophilen Vernetzer V2 als klare, gelbe Flüssigkeit mit einer Viskosität von 95 mPas (bei 23 °C).

### Beispiel 3: hydrophiler Vernetzer V3

In einem Dreihalskolben mit Rückflusskühler wurden 76,0 g Isocyanatopropyltriethoxysilan (IPES), 23,5 g Diethylmalonat und 0,5 g Zinkethylhexanoat vorgelegt und mit Stickstoff abgedeckt. Unter Rühren wurde für 5 h auf 80 °C erhitzt und danach auf Raumtemperatur abgekühlt. Bei Raumtemperatur wurde der Ansatz 4 Tage stehengelassen bis ein NCO-Gehalt von < 0,4 Gew.-% NCO erreicht wurde. Der so erhaltene erfindungsgemäße hydrophiler Vernetzer V3 ist eine klare, gelbe Flüssigkeit mit einer Viskosität von 67 mPas (bei 23 °C).

### Beispiel 4: hydrophiler Vernetzer V4

In einem Dreihalskolben mit Rückflusskühler wurden 303,5 g Isocyanatopropyltrimethoxysilan (IPMS), 95,5 g Ethylacetoacetat und 2,0 g Zinkethylhexanoat vorgelegt und mit Stickstoff abgedeckt. Unter Rühren wurde für 20 Tage auf 60 °C erhitzt bis ein NCO-Gehalt von < 0,4 Gew.-% NCO erreicht wurde. Nach Abkühlen auf Raumtemperatur erhält man den erfindungsgemäßen hydrophilen Vernetzer V4 als klare, braune Flüssigkeit mit einer Viskosität von 64 mPas (bei 23 °C).

### Beispiel 5: hydrophiler Vernetzer V5

In einem Dreihalskolben mit Rückflusskühler wurden 450,5 g Isocyanatopropyltrimethoxysilan (IPMS), 345,5 g Diethylmalonat und 4,0 g Zinkethylhexanoat vorgelegt und mit Stickstoff abgedeckt. Es wurde unter Rühren auf 60 °C erhitzt und bis nach 60 h ein NCO-Gehalt von < 0,1 Gew.-% NCO erreicht wurde. Nach Abkühlen auf Raumtemperatur erhält man den erfindungsgemäßen Vernetzer V5 als klare, gelbe Flüssigkeit mit einer Viskosität von 62 mPas (bei 23 °C).

### 2. Herstellung eines RT-härtenden Klarlacks mittels hydrophilen Vernetzers

Für die Formulierung der erfindungsgemäßen RT-härtenden Klarlacke und der Vergleichsbeispiele wurden die Komponenten der in Tabelle 1 dargestellten Zusammensetzungen eingesetzt. Dabei wurde die Bindemittelkomponente (hier: Bona Traffic HD, enthält Wasser und Polyurethan, ca. 32 Gew.-% Feststoffgehalt) in einer Flasche vorgelegt mit dem hydrophilen Vernetzer versetzt und das Gemisch mit einem Holzspatel ca. 30 Sekunden intensiv gerührt. Es entsteht eine homogene Dispersion. Diese wird über ein 80 µm Filter filtriert und dann mit einer Schichtdicke von 15 - 35 µm auf Stahlbleche (Gardobond GB26S 60 OC) mittels 120 µm Spiralrakel aufgerakelt. Nachfolgend wird dieses beschichtete Blech nach Stehenlassen bei Raumtemperatur analytisch geprüft.

Die Viskosität der Formulierungen betrug, bestimmt als Auslaufzeit im DIN-4-Becher bei 23 °C, ca. 20 Sekunden.

Für die Bestimmung der in Tabelle 2 aufgeführten Topfzeit wurde der jeweilige Lackansatz aus Tabelle 1 zeitabhängig mittels 120 µm Spiralrakel auf eine Schwarz-Weiß-Karte appliziert und die resultierende Beschichtung beurteilt. Das Ende der Topfzeit wurde über das Auftreten von Rakelspuren definiert.

Aus Tabelle 2 geht hervor, dass die Beschichtungen aus Zusammensetzung III, IV, VI und VII, die die erfindungsgemäßen hydrophilen Vernetzer V1, V2, V4 und V5 enthalten, gute Lackeigenschaften besitzen. Insbesondere zeigen die Beschichtungen III, VI und VII sogar bessere Chemikalienbeständigkeiten (MEK-Test) als der Stand der Technik, der Beschichtung II mit dem Bona Traffic Hardener, einem hydrophilen Polyisocyanat, als Härter. Bemerkenswert ist zudem die Topfzeit von einem Tag, welche die Zusammensetzung IV mit dem hydrophilen Vernetzer V2 zeigt. Üblicherweise liegen die Topfzeiten bei wenigen Stunden, wie es die Zusammensetzung II mit dem Bona Traffic Hardener zeigt.

Die Zusammensetzung mit dem hydrophilen Vernetzer V3, welcher auf IPES basiert, zeigt unerwartet nicht so hervorragende Eigenschaften, wie die anderen auf IPMS basierten Zusammensetzungen.

**Tabelle 1: Zusammensetzung der erfindungsgemäßen RT-härtenden Klarlacken und Vergleichsbeispiel, Angaben in Gewichtsanteilen**

| Position | | I | II | III (erfindungsgemäß) | IV (erfindungsgemäß) | V (erfindungsgemäß) | VI (erfindungs -gemäß) | VII (erfindungsgemäß) |
|---|---|---|---|---|---|---|---|---|
| 1 | Bona Traffic HD (Bindemittelkomponente) | 100 | 90 | 90,0 | 90.0 | 89,6 | 89,6 | 89,6 |
| 2 | Bona Traffic Hardener | | 10 | | | | | |
| 3 | Beispiel V1 | | | 10,0 | | | | |
| 4 | Beispiel V2 | | | | 10,0 | | | |
| 5 | Beispiel V3 | | | | | 9,95 | | |
| 6 | Beispiel V4 | | | | | | 9,95 | |
| 7 | Beispiel V5 | | | | | | | 9,95 |
| 8 | Vestanat EP Cat 11 H | | | | | 0,45 | 0,45 | 0,45 |

**Tabelle 2: Lackeigenschaften der Zusammensetzungen I-IV nach Härtung bei 23°C (7 Tage)**

| Zusammensetzung | I | II | III (erfindunggemäß) | IV (erfindungsgemäß) | V (erfindungsgemäß) | VI (erfindungs -gemäß) | VII (erfindungsgemäß) |
|---|---|---|---|---|---|---|---|
| Erichsen Tiefung [mm] (EN ISO 1520) | 8,0 | 8,0 | 7,5 | 7,5 | 8,0 | 7,5 | 10 |
| Kugelschlag[In Ibs] (DIN-EN-ISO 6272-1) | 80 | 80 | >160 | 80 | 80 | 80 | 80 |
| MEK-Test [ASTM D 4752] (Doppelhübe, 1 kg Auflagegewicht) | 10 | 80 | 150 | 65 | 10 | 150 | 150 |
| Topfzeit des 2-K-Systems | - | 4 h | 1 d | >1 d | - | 3 h | 4h |

## Patentansprüche

1. Zusammensetzung umfassend
(i) mindestens einen hydrophilen Vernetzer der allgemeinen Formel (I) oder eine Mischung enthaltend mindestens zwei der hydrophilen Vernetzer der allgemeinen Formel (I),
G¹YG¹ (I),
wobei jedes G¹ unabhängig aus H und einer Gruppe der Formel (IIa)
-(C=O)-NH-R-Si(OR')₃ (IIa),
ausgewählt wird, wobei mindestens ein G¹ eine Gruppe der Formel (IIa) ist, und
(ii) Wasser,
wobei R jeweils unabhängig einem aliphatischen (Cyclo)Alkylenrest mit 1 bis 10 C-Atomen entspricht, und R' jeweils unabhängig einen linearen, verzweigten oder cyclischen Alkylrest mit 1 bis 10 C-Atomen oder H darstellt, und
wobei Y ausgewählt ist aus substituierten linearen, aliphatischen, (cyclo)-aliphatischen oder verzweigten aliphatischen Verbindungen mit mindestens 3 C-Atomen, die an einem C-Atom mindestens eine elektronenziehende Gruppe oder mindestens einen elektronenziehenden Substituenten aufweisen.

2. Zusammensetzung nach Anspruch 1, **dadurch gekennzeichnet, dass**
(i) Y ausgewählt ist aus substituierten linearen, aliphatischen, (cyclo)-aliphatischen oder verzweigten aliphatischen Verbindungen mit mindestens 3 C-Atomen, die an mindestens einem alpha-ständigen C-Atom zu dem C-Atom das mit einer oder zwei Gruppen der allgemeinen Formel (IIa), wie vorstehend definiert, substituiert ist, mindestens eine elektronenziehende Gruppe oder mindestens einen elektronenziehenden Substituenten aufweisen,
und/oder
(ii) Y ausgewählt ist aus substituierten linearen, aliphatischen, (cyclo)-aliphatischen oder verzweigten aliphatischen Verbindungen mit mindestens 3 C-Atomen,
wobei Y an zwei unterschiedlichen alpha-ständigen C-Atomen, die zu dem C-Atom das mit einer oder zwei Gruppen der allgemeinen Formel (IIa), wie vorstehend definiert, substituiert ist, jeweils mindestens eine elektronenziehende Gruppe oder mindestens einen elektronenziehenden Substituenten aufweist.

3. Zusammensetzung nach Anspruch 1 oder 2,
wobei (i) der hydrophile Vernetzer der allgemeinen Formel (I) oder die Mischung enthaltend mindestens zwei der hydrophilen Vernetzer der allgemeinen Formel (I) erhalten wird, indem in einem ersten Schritt:
mindestens ein Isocyanatoalkylalkoxysilan der Formel (II) oder eine Mischung von mindestens zwei der Isocyanatoalkylalkoxysilane der Formel (II)
(R'O)₃Si-R-N=C=O (II)
mit einer
organofunktionellen C-H-aziden Verbindung der Formel (III)
HYH (III)
mit mindestens zwei aziden Wasserstoffatomen, umgesetzt wird,
wobei in Formel (II) R jeweils unabhängig einem aliphatischen (Cyclo)Alkylenrest mit 1 bis 10 C-Atomen entspricht, und R' jeweils unabhängig einen linearen, verzweigten oder cyclischen Alkylrest mit 1 bis 10 C-Atomen oder H darstellt, und
wobei die organofunktionelle C-H-azide Verbindung der Formel (III) eine substituierte lineare aliphatische, (cyclo)-aliphatische oder verzweigte aliphatische Verbindung mit mindestens 3 C-Atomen ist, die an mindestens einem alpha-ständigen Kohlenstoffatom zum C-H aziden C-Atom mindestens eine elektronenziehende Gruppe oder mindestens einen elektronenziehenden Substituenten aufweist.

4. Zusammensetzung nach einem der Ansprüche 1 bis 3, **dadurch gekennzeichnet, dass** die organofunktionelle C-H-azide Verbindung der Formel (III) oder Y in der allgemeinen Formel (I) eine β-Di-funktionalisierte Verbindung, umfassend β-Di-Ester-, β-Di-Nitril-, cyclische β-Di-Keton, β-Ketoester, β-Di-Sulfoxid-, β-Di-Sulfon-, β-Di-Nitro, β-Di-Phosphonato, β-Di-Isonitril-Verbindungen oder eine β-Di-funktionalisierte Verbindung, umfassend mindestens zwei elektronenziehenden Gruppen oder elektronenziehenden Substituenten, ist.

5. Zusammensetzung nach einem der Ansprüche 1 bis 4, **dadurch gekennzeichnet, dass** die organofunktionelle C-H azide Verbindung der Formel (III) der folgenden allgemeinen Formel (IV) entspricht, wobei R¹ und R² jeweils unabhängig voneinander ausgewählt sind aus - H, -(CH₂)ᵣR⁴, mit r = 0 bis 12, -OR⁵ und -NHR⁵, wobei
R⁴ und R⁵ jeweils unabhängig voneinander aus der Gruppe, bestehend aus H, einer optional ein Heteroatom, insbesondere -O- und/oder -N-, enthaltenden Alkylgruppe mit 1 bis 18 C-Atomen, einer optional ein Heteroatom, insbesondere -O- und/oder -N-, enthaltenden Cycloalkylgruppe mit 3 bis 18 C-Atomen, einer optional ein Heteroatom, insbesondere -O- und/oder -N-, enthaltenden Alkylarylgruppe mit 6 bis 18 C-Atomen, einer bivalenten Alkylengruppe mit 1 bis 10 C-Atomen, einer Alkylenoxidgruppe mit mindestens 4 C-Atomen, insbesondere mit 4 bis 16 C-Atomen, einer Polyethergruppe, wie Polyalkylenoxidpolyether, einer Polyhydroxy-funktionelle Gruppe mit 1 bis 18 C-Atomen, einer-O- und/oder -N- enthaltenden Heteroaromatgruppe mit 5 bis 18 C-Atomen und einer -O- oder -NH-Polyethergruppe, der eine oder mehrere verschiedene Polyglykoleinheiten (CH₂CH₂O)ₚR"enthält, wovon vorzugsweise mindestens eine endständig angeordnet ist, wobei m jeweils unabhängig voneinander 0 bis 20, p 4 bis 20 und R" ein Alkyl-Rest mit 1 bis 18 C-Atomen oder H ist, ausgewählt wird.

6. Zusammensetzung nach einem der Ansprüche 1 bis 5, **dadurch gekennzeichnet, dass** die organofunktionelle C-H-azide Verbindung der Formel (III), die organofunktionelle C-H-azide Verbindung der allgemeinen Formel (IV) oder Y in der allgemeinen Formel (I) ein Malonester, ein β-Ketoester oder ein Derivat davon ist.

7. Zusammensetzung nach einem der Ansprüche 1 bis 6, **dadurch gekennzeichnet, dass** das Isocyanatoalkylalkoxysilan der Formel (II) ausgewählt ist aus Isocyanatopropyltriethoxysilan und Isocyanatopropyltrimethoxysilan.

8. Zusammensetzung nach einem der Ansprüche 1 bis 7, **dadurch gekennzeichnet, dass** sie zusätzlich
(iii) mindestens ein Bindemittel oder eine Mischung von mindestens zwei Bindemitteln;
(iv) optional bis 4 Gew.-% mindestens eines Katalysators;
(v) optional organische Lösemittel;
(vi) optional Hilfs- und/oder Zusatzstoffe;
umfasst.

9. Verfahren zur Herstellung einer Zusammensetzung umfassend einen hydrophilen Vernetzer der allgemeinen Formel (I) und Wasser nach den Alternativen:
A) Herstellen mindestens eines hydrophilen Vernetzers der allgemeinen Formel (I), wie vorstehend definiert, oder einer Mischung von hydrophilen Vernetzern der allgemeinen Formel (I), wie vorstehend definiert,
indem in einem ersten Schritt:
mindestens ein Isocyanatoalkylalkoxysilan der Formel (II), wie vorstehend definiert, oder eine Mischung von mindestens zwei der Isocyanatoalkylalkoxysilane der Formel (II), wie vorstehend definiert, mit einer organofunktionellen C-H-aziden Verbindung der Formel (III), wie vorstehend definiert, umgesetzt wird, wobei
optional in einem nachfolgenden Schritt nicht umgesetztes Isocyanatoalkylalkoxysilan der Formel (II), wie vorstehend definiert, abgetrennt oder mit einer Hydroxy-funktionellen Kohlenwasserstoff-Verbindung umgesetzt wird,
wodurch eine Zusammensetzung, umfassend mindestens einen hydrophilen Vernetzer der allgemeinen Formel (I), wie vorstehend definiert, oder eine Mischung von mindesten zwei der hydrophilen Vernetzer der Formel (I), wie vorstehend definiert, erhalten wird; und
danach die Zusammensetzung, umfassend mindestens einen hydrophilen Vernetzer der allgemeinen Formel (I), wie vorstehend definiert, oder einer Mischung von mindestens zwei der hydrophilen Vernetzer der Formel (I), wie vorstehend definiert, und Wasser durch Mischen der Zusammensetzung mit Wasser hergestellt wird,
oder
B) Mischen der Zusammensetzung umfassend mindestens einen hydrophilen Vernetzer der allgemeinen Formel (I) oder einer Mischung von mindestens zwei der hydrophilen Vernetzer der Formel (I), wie vorstehend definiert, mit Wasser.

10. Verfahren nach Anspruch 9, **dadurch gekennzeichnet, dass** die Umsetzung des Isocyanatoalkylalkoxysilans der Formel (II), wie vorstehend definiert, mit der organofunktionellen C-H aziden Verbindung der Formel (III), wie vorstehend definiert, im molaren Verhältnis von 1,1 : 1 bis 100 : 1 erfolgt.

11. Verfahren nach Anspruch 9 oder 10, **dadurch gekennzeichnet, dass** die Umsetzung eines Isocyanatoalkylalkoxysilans der Formel (II), wie vorstehend definiert, mit der organofunktionellen C-H-aziden Verbindung der Formel (III) in Gegenwart eines Katalysators erfolgt.

12. Verwendung einer Zusammensetzung nach einem der Ansprüche 1 bis 8 oder erhalten nach einem der Ansprüche 9 bis 11, als Vernetzerkomponente, in einem wasserlöslichen oder in wasserdispergierbaren Lackbindemittel oder Lackbindemittelkomponenten, insbesondere als eine Komponente eines 2K-Polyurethan-Systems, in einem wasserlöslichen oder in wasserdispergierbaren Beschichtungsmittel oder einer-beschichtungsmittel-Komponente, zur Herstellung von Polyurethan- und/oder Acrylat-Kunststoffen, oder mit blockierten Polyisocyanaten, in wässrigen Einkomponenten Polyurethan-Einbrennsystemen (1K-PUR).

13. Verwendung einer Zusammensetzung nach einem der Ansprüche 1 bis 8 oder erhalten nach einem der Ansprüche 9 bis 11 zur Behandlung von Substraten basierend auf Metallen, Legierungen, Holz, Glas, Stein, keramischen Materialien, Hybridmaterialen, Beton, harten Kunststoffen, flexiblen Kunststoffen, Textilien, Leder und/oder Papier.
